(19) Europäisches Patentamt
European Patent Office
Office européen des brevets

(11) **EP 3 229 105 A1**

(12) **EUROPEAN PATENT APPLICATION**
published in accordance with Art. 153(4) EPC

(43) Date of publication:
**11.10.2017 Bulletin 2017/41**

(51) Int Cl.:
***G06F 3/01*** *(2006.01)*

(21) Application number: **15874942.4**

(86) International application number:
**PCT/CN2015/092943**

(22) Date of filing: **27.10.2015**

(87) International publication number:
**WO 2016/107257 (07.07.2016 Gazette 2016/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **31.12.2014  CN 201410857634**

(71) Applicant: **HUAWEI TECHNOLOGIES CO., LTD.
Shenzhen Guangdong 518129 (CN)**

(72) Inventors:
• **WANG, Yahui
Shenzhen
Guangdong 518129 (CN)**
• **GAO, Wenmei
Shenzhen
Guangdong 518129 (CN)**

(74) Representative: **Epping - Hermann - Fischer
Patentanwaltsgesellschaft mbH
Schloßschmidstraße 5
80639 München (DE)**

(54) **SCREEN DISPLAY METHOD FOR WEARABLE DEVICE, AND WEARABLE DEVICE**

(57)    A display processing method for a screen of a wearable device and a wearable device are provided, where the method includes: determining a position of a display area of the screen according to an operation manner of viewing, by a user, current content displayed on the screen, where the display area is a partial area of the screen, and the operation manner includes one of a display area designation operation and an automatic display area identification operation; and lighting up the display area at the position of the display area to display the current content, so that when the wearable device rotates, a processor of the wearable device can adaptively display the current content in a visibility range of the user.

FIG. 2

## Description

This application claims priority to Chinese Patent Application No. CN 201410857634.9, filed with the Chinese Patent Office on December 31, 2014 and entitled "DISPLAY METHOD FOR SCREEN OF WEARABLE DEVICE AND WEARABLE DEVICE", which is incorporated herein by reference in its entirety.

## TECHNICAL FIELD

The present invention relates to electronic device technologies, and in particular, to a display method for a screen of a wearable device and a wearable device.

## BACKGROUND

With continuous development of smart technologies for wearable devices, there are increasing kinds of wearable device products, such as a watch, a wristband, glasses, a ring, and a smart necklace, and various functions are increasingly powerful. For an existing wearable device, for example, a watch or a wristband, a display area of a device screen is at a fixed position of the watch or the wristband, and the display area occupies the entire display screen. When a user needs to view displayed content in the display area, the user needs to manually adjust the display area to a proper position within a visibility range of the user, which affects user experience.

## SUMMARY

Embodiments of the present invention provide a display method for a screen of a wearable device and a wearable device, which resolves a problem that a user needs to manually and repeatedly adjust a display area when viewing displayed content on the screen.

According to a first aspect, a display method for a screen of a wearable device is provided, where the method includes: determining a position of a display area of the screen according to an operation manner of viewing, by a user, current content displayed on the screen, where the display area is a partial area of the screen, and the operation manner includes one of a display area designation operation and an automatic display area identification operation; and lighting up the display area at the position of the display area to display the current content.

With reference to the first aspect, in a first possible implementation manner of the first aspect, the display area designation operation includes tapping the screen at a target display position, and the automatic display area identification operation includes: tapping the screen at any position of the screen, pressing a screen display key, a hover gesture operation, shaking or swinging the wearable device for specified times, a move track of the wearable device reaching a defined track range and a stay time on a move end point reaching a specified time, or an acceleration of the wearable device reaching a defined threshold and a stay time on a move end point reaching a specified time.

With reference to the first possible implementation manner of the first aspect, in a second possible implementation manner of the first aspect, when the operation manner is the automatic display area identification operation, the determining a position of a display area of the screen according to an operation manner of viewing, by a user, current content displayed on the screen includes: determining a rotation angle of the wearable device, and determining the position of the display area according to a reference display area and a first correspondence between the rotation angle and a move amount of the display area, where the first correspondence is a continuous mapping correspondence between the rotation angle and the move amount of the display area or a relationship in which a first threshold that the rotation angle reaches corresponds to a first fixed value of the move amount of the display area.

With reference to the first possible implementation manner of the first aspect, in a third possible implementation manner of the first aspect, when the operation manner is the automatic display area identification operation, the determining a position of a display area of the screen according to an operation manner of viewing, by a user, current content displayed on the screen includes: determining an arc length of a rotation track of the wearable device, and determining the position of the display area according to a reference display area and a second correspondence between the arc length of the rotation track and a move amount of the display area, where the second correspondence is a continuous mapping correspondence between the arc length of the rotation track and the move amount of the display area or a correspondence in which a second threshold that the arc length of the rotation track reaches corresponds to a second fixed value of the move amount of the display area.

With reference to the first possible implementation manner of the first aspect, in a fourth possible implementation manner of the first aspect, when the operation manner is the display area designation operation, the determining a position of a display area of the screen according to an operation manner of viewing, by a user, current content displayed on the screen includes: determining, by using a user tapping position as a center, the position of the display area according to a specified display area size.

With reference to any one of the first aspect and the foregoing possible implementation manners of the first aspect, in a fifth possible implementation manner of the first aspect, the method further includes: before the lighting up the display area at the position of the display area to display the current content, further including: determining a left/right hand mode of the wearable device according to a direction of the move track of the wearable device, where in the left hand mode of the wearable device, the current content is displayed in a first direction, and in the right hand mode of the wearable device, the current content is displayed in a second direction.

With reference to any one of the first aspect and the foregoing possible implementation manners of the first aspect, in a sixth possible implementation manner of the first aspect, after the lighting up the display area at the position of the display area to display the current content, the method includes: when display space occupied by the current content does not exceed the display area, switching a page of the current content as the display area moves; or when display space occupied by the current content exceeds the display area, further displaying at least a part of remaining content of the current content as the display area moves.

With reference to any one of the first aspect and the foregoing possible implementation manners of the first aspect, in a seventh possible implementation manner of the first aspect, after the lighting up the display area at the position of the display area to display the current content, the method further includes: calibrating the position of the display area according to a calibration signal generated by a user operation.

According to a second aspect, a wearable device is provided, where the wearable device includes: a position determining module, configured to determine a position of a display area of the screen according to an operation manner of viewing, by a user, current content displayed on the screen, where the display area is a partial area of the screen, and the operation manner includes one of a display area designation operation and an automatic display area identification operation; and a display control module, configured to light up the display area at the position of the display area to display the current content.

With reference to the second aspect, in a first possible implementation manner of the second aspect, the display area designation operation includes tapping the screen at a target display position, and the automatic display area identification operation includes: tapping the screen at any position of the screen, pressing a screen display key, a hover gesture operation, shaking or swinging the wearable device for specified times, a move track of the wearable device reaching a defined track range and a stay time on a move end point reaching a specified time, or an acceleration of the wearable device reaching a defined threshold and a stay time on a move end point reaching a specified time.

With reference to the first possible implementation manner of the second aspect, in a second possible implementation manner of the second aspect, when the operation manner is the automatic display area identification operation, the position determining module determines a rotation angle of the wearable device, and determines the position of the display area according to a reference display area and a first correspondence between the rotation angle and a move amount of the display area, where the first correspondence is a continuous mapping correspondence between the rotation angle and the move amount of the display area or a correspondence in which a first threshold that the rotation angle reaches corresponds to a first fixed value of the move amount of the display area.

With reference to the first possible implementation manner of the second aspect, in a third possible implementation manner of the second aspect, when the operation manner is the automatic display area identification operation, the position determining module determines an arc length of a rotation track of the wearable device, and determines the position of the display area according to a reference display area and a second correspondence between the arc length of the rotation track and a move amount of the display area, where the second correspondence is a continuous mapping correspondence between the arc length of the rotation track and the move amount of the display area or a correspondence in which a second threshold that the arc length of the rotation track reaches corresponds to a second fixed value of the move amount of the display area.

With reference to the first possible implementation manner of the second aspect, in a fourth possible implementation manner of the second aspect, when the operation manner is the display area designation operation, the position determining module determines, by using a user tapping position as a center, the position of the display area according to a specified display area size.

With reference to any one of the second aspect and the foregoing possible implementation manners of the second aspect, in a fifth possible implementation manner of the second aspect, the wearable device further includes a mode identification module, and the mode identification module determines a left/right hand mode of the wearable device according to a direction of the move track of the wearable device, where in the left hand mode of the wearable device, the current content is displayed in a first direction, and in the right hand mode of the wearable device, the current content is displayed in a second direction.

With reference to any one of the second aspect and the foregoing possible implementation manners of the second aspect, in a sixth possible implementation manner of the second aspect, when determining that display space occupied by the current content does not exceed the display area, the display control module controls a page of the current content to be switched as the display area moves; or when determining that display space occupied by the current content exceeds the display area, the display control module controls a movement of the display area to further display at least a part of remaining content of the current content.

With reference to any one of the second aspect and the foregoing possible implementation manners of the second aspect, in a seventh possible implementation manner of the second aspect, the wearable device further includes a calibration module, and the calibration module calibrates the position of the display area according to a calibration signal generated by a user operation.

According to a third aspect, a wearable device is provided, where the wearable device includes at least one processor, a display screen, and an input unit; the display screen and the input unit are connected to the processor by using a data bus, the input unit receives an operation of viewing, by a user, current content displayed on the display screen, the processor determines a position of a display area of the display screen according to the operation manner of viewing, by the user, the current content displayed on the display screen, where the display area is a partial area of the screen, and the operation manner includes one of a display area designation operation and an automatic display area identification operation, and the processor controls the display screen, and lights up the display area at the position of the display area to display the current content.

With reference to the third aspect, in a first possible implementation manner of the third aspect, the display area designation operation includes tapping the screen at a target display position, and the automatic display area identification operation includes: tapping the screen at any position of the screen, pressing a screen display key, a hover gesture operation, shaking or swinging the wearable device for specified times, a move track of the wearable device reaching a defined track range and a stay time on a move end point reaching a specified time, or an acceleration of the wearable device reaching a defined threshold and a stay time on a move end point reaching a specified time.

With reference to the first possible implementation manner of the third aspect, in a second possible implementation manner of the third aspect, when the operation manner is the automatic display area identification operation, the processor determines a rotation angle of the wearable device, and determines the position of the display area according to a reference display area and a first correspondence between the rotation angle and a move amount of the display area, where the first correspondence is a continuous mapping correspondence between the rotation angle and the move amount of the display area or a correspondence in which a first threshold that the rotation angle reaches corresponds to a first fixed value of the move amount of the display area.

With reference to the first possible implementation manner of the third aspect, in a third possible implementation manner of the third aspect, when the operation manner is the automatic display area identification operation, the processor determines an arc length of a rotation track of the wearable device, and determines the position of the display area according to a reference display area and a second correspondence between the arc length of the rotation track and a move amount of the display area, where the second correspondence is a continuous mapping correspondence between the arc length of the rotation track and the move amount of the display area or a correspondence in which a second threshold that the arc length of the rotation track reaches corresponds to a second fixed value of the move amount of the display area.

With reference to the first possible implementation manner of the third aspect, in a fourth possible implementation manner of the third aspect, when the operation manner is the display area designation operation, the processor determines, by using a user tapping position as a center, the position of the display area according to a specified display area size.

With reference to any one of the third aspect and the foregoing possible implementation manners of the third aspect, in a fifth possible implementation manner of the third aspect, the processor further determines a left/right hand mode of the wearable device according to a direction of the move track of the wearable device, where in the left hand mode of the wearable device, the current content is displayed in a first direction, and in the right hand mode of the wearable device, the current content is displayed in a second direction.

With reference to any one of the third aspect and the foregoing possible implementation manners of the third aspect, in a sixth possible implementation manner of the third aspect, when determining that display space occupied by the current content does not exceed the display area, the processor controls a page of the current content to be switched as the display area moves; or when determining that display space occupied by the current content exceeds the display area, the processor controls a movement of the display area to further display at least a part of remaining content of the current content.

With reference to any one of the third aspect and the foregoing possible implementation manners of the third aspect, in a seventh possible implementation manner of the third aspect, the processor further calibrates the position of the display area according to a calibration signal generated by a user operation.

**BRIEF DESCRIPTION OF DRAWINGS**

To describe the technical solutions in the embodiments of the present invention or in the prior art more clearly, the following briefly describes the accompanying drawings required for describing the embodiments or the prior art. Apparently, the accompanying drawings in the following description show only some embodiments of the present invention, and persons of ordinary skill in the art may still derive other drawings from these accompanying drawings without creative efforts.

FIG. 1 is a schematic diagram of a wearable device according to an embodiment of the present invention;
FIG. 2 is a schematic diagram of a hardware architecture of the wearable device according to an embodiment of the present invention;
FIG. 3 is a schematic diagram of a reference coordinate system, in which the wearable device moves or rotates, defined according to an embodiment of the present invention;

FIG. 4 is a schematic diagram of a move track of the wearable device in a left/right hand mode according to an embodiment of the present invention;

FIG. 5 is a schematic diagram of a coordinate system of a rotation acceleration of the wearable device according to an embodiment of the present invention;

FIG. 6 is a schematic diagram of a rotation angle of the wearable device according to an embodiment of the present invention;

FIG. 7 is a flowchart of a display processing method for a screen of a wearable device according to an embodiment of the present invention; and

FIG. 8 is a schematic diagram of a module structure of a wearable device according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are only some but not all of the embodiments of the present invention. All other embodiments obtained by persons of ordinary skill in the art based on the embodiments of the present invention without creative efforts shall fall within the protection scope of the present invention.

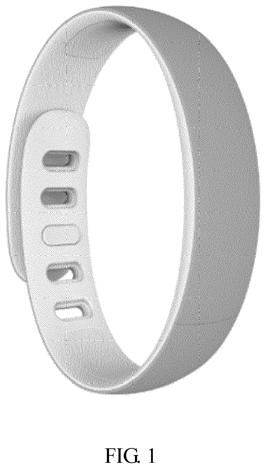

A wearable device and a display method for a screen of the wearable device are described in the embodiments of the present invention. The wearable device may be an electronic device such as a watch, a wristband, or a ring, mainly be a wearable device with a relatively long screen. For example, a screen of a watch or a wristband may be an entirely toroidal curved screen, a partially strip-shaped flat screen, a partially curved screen, a flat-and-curved screen, or a screen that is formed by connecting at least two flat screens and that has multiple display areas. Using a wristband as an example, in an embodiment of the present invention, as shown in FIG. 1, it is assumed that a screen of the wristband is a toroidal curved screen. When a user views the screen, the user lifts a wrist and rotates the screen by any angle, a display area is adaptively located within a visibility range of eyes of the user always, and the display area is lighted up at the adaptive position. When the user rotates the wearable device, the display area moves as the wearable device rotates, helping the user view the screen and resolving a problem that a user cannot view displayed content because a display area deviates from a line of sight of the user when a wearable device rotates. An implementation solution of the embodiments of the present invention is described in detail in the following embodiments.

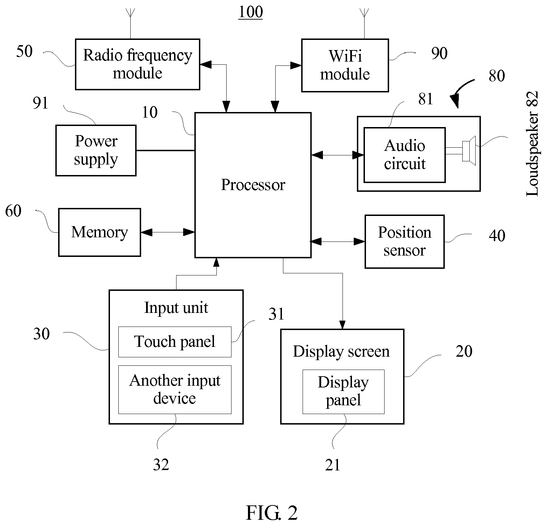

FIG. 2 is a schematic structural diagram of a wearable device 100 according to an embodiment of the present invention.

Referring to FIG. 2, the wearable device 100 in this embodiment of the present invention may include at least one processor 10, a display screen 20, an input unit 30, and a position sensor 40. The display screen 20, the position sensor 40, and the input unit 30 are connected to the processor 10 by using a data bus, the input unit 30 receives an operation of viewing, by a user, current content displayed on the display screen, and the processor 10 determines a position of a display area of the display screen 20 according to the operation manner of viewing, by the user, the current content displayed on the display screen, where the display area is a partial area of the display screen 20, and the operation manner includes one of a display area designation operation and an automatic display area identification operation. The processor 10 controls the display screen 20, and lights up the display area at the position of the display area to display the current content.

The wearable device in this embodiment of the present invention can locate the position of the display area of the display screen by determining a manner of an operation performed by the user on the wearable device, so as to light up the display area to display the current content, and the user does not need to manually adjust the wearable device to a proper position to view the current displayed content.

The position sensor 40 may be at least one tri-axis acceleration sensor, and the acceleration sensor may be used to measure an inclination angle of the device by using the gravity acceleration. However, the acceleration sensor is affected by a motion acceleration, resulting in a deviation in inclination angle measurement. Generally, a compensation measurement sensor such as a gyroscope or a magnetic sensor may be further used to perform compensation measurement for a rotation angle of the wearable device.

The following describes an implementation process of the foregoing solution by using examples, which is only for ease of further understanding the solution of the embodiment of the present invention by readers, but is not intended to limit the protection scope of the present invention, and there may be another implementation manner.

A user wears or holds the wearable device, and when the user wants to view content displayed on the display screen of the wearable device, the user may view the displayed content in the following several operation manners.

The operation manner may be a user performing a display area designation operation. For example, the user taps the screen at a target display position, the processor 10 determines the position at which the user taps, and determines, by using the user tapping position as a center, the position of the display area according to a specified display area size.

Optionally, the user may also determine the position of the display area by performing the automatic display area identification operation. For example, the automatic display area identification operation may be:

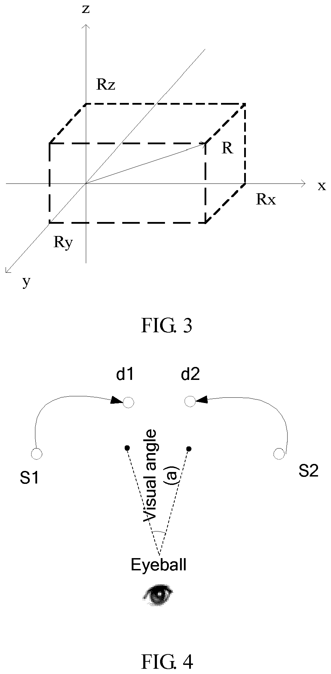

tapping the display screen 20 at any position of the screen, pressing a specified key, a hover gesture operation, shaking or swinging the wearable device for specified times, a move track of the wearable device reaching a defined track range and a stay time on an end point of the move track reaching a specified time, or an acceleration value of the wearable device reaching a defined threshold and a stay time of the wearable device on a move end point reaching a specified time. The processor 10 determines, according to an operation signal of the foregoing operation, that the user wants to view the content displayed on the display screen 20. The implementation process of the solution is further explained by using an example in which an acceleration value of the wearable device reaches a defined threshold and a stay time on the move track end point reaches a specified time. As shown in FIG. 3, a standard three-dimensional coordinate system XYZ is defined. The position sensor 40 measures acceleration values of the wearable device in three directions: an X-axis, a Y-axis, and a Z-axis, which respectively are assumed as Rx, Ry, and Rz. The processor 10 determines, by using a vector addition method, a resultant vector R of an X-axis acceleration, a Y-axis acceleration, and a Z-axis acceleration. If a Y-axis acceleration value measured by the position sensor 40 changes from the gravity acceleration g to a non-gravitational acceleration and a Z-axis acceleration value changes from a non-gravitational acceleration to the gravity acceleration g, it indicates that the wearable device is static. The processor records a static time of the wearable device, and if the static time exceeds a threshold T (for example, Is), determines that the user needs to view the screen at this time. The threshold T may be an empirical threshold obtained after practice, or a threshold defined by a device manufacturer, and the user can change and set the threshold.

Optionally or further, as shown in FIG. 4, the processor 10 obtains coordinates that are of the move track of the wearable device and measured by the position sensor 40, and the processor 10 may determine, according to the move track coordinates, whether the move track of the wearable device is in a clockwise direction d1 or a counterclockwise direction d2. For example, if the move track is in the clockwise direction d1, it is determined that the wearable device is worn on the left hand of the user, that is, in a left hand mode; or if the move track is in the counterclockwise direction d2, it is determined that the wearable device is worn on the right hand of the user, that is, in a right hand mode. In the left hand mode of the wearable device, the current content is displayed in a first direction, and in the right hand mode of the wearable device, the current content is displayed in a second direction.

Optionally or further, another manner may be used to determine a left/right hand mode of the wearable device. The processor 10 determines an acceleration of the wearable device according to data monitored by the position sensor 40, and determines the left/right hand mode according to the acceleration. Specifically, the processor 10 determines the left/right hand mode of the wearable device according to the foregoing determined resultant vector R. If the resultant vector R is in the first quadrant, that is, components on the three axes are all positive, it is determined that the wearable device is worn on the left hand of the user, that is, in the left hand mode; or if the resultant vector R is in the second quadrant of the coordinate system, that is, a component on the Y-axis is negative and components on the X-axis and Z-axis are positive, it is determined that the wearable device is worn on the right hand of the user.

It should be noted that, a direction of the displayed content may be controlled in the left/right hand mode of the wearable device determined by the processor 10 in this embodiment; the user can randomly wear the device on the left/right hand, and does not need to adjust a wearing direction. Certainly, the processor 10 may either not identify the left/right hand mode of the wearable device, and the user performs manual adjustment.

Further, the processor 10 may obtain coordinate data measured by the position sensor 40, and determine a rotation angle of the wearable device. Specifically, the rotation angle of the wearable device is calculated according to the tri-axis acceleration values measured by the position sensor 40 and tri-axis acceleration values of a reference point, and the position of the display area is further determined according to a reference display area and a first correspondence between the rotation angle and a move amount of the display area.

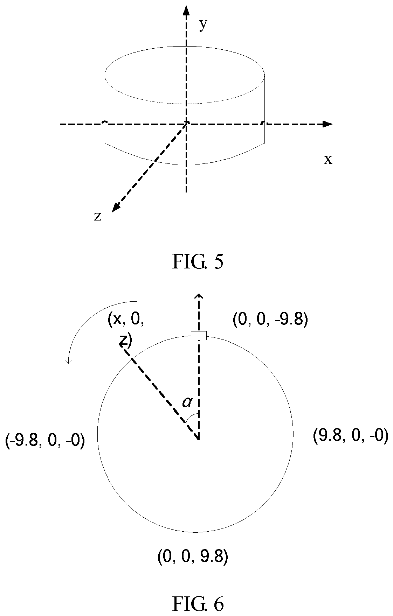

Persons skilled in the art may calculate the rotation angle $\alpha$ of the wearable device in the following manner. As shown in FIG. 5 and FIG. 6, in the foregoing standard three-dimensional coordinate system XYZ, it is defined that a direction perpendicular to the screen of the wearable device is a Y-axis direction, and two axis directions along a plane direction of the screen of the wearable device and perpendicular to each other are respectively an X-axis direction and a Z-axis direction. It is defined that initial tri-axis accelerations of the position sensor 40 are (x, y, z) = (0, -g, 0), where x is an X-axis acceleration, z is a Z-axis acceleration, and g is the gravity acceleration. The rotation angle $\alpha$ of the wearable device may be calculated in the following manner. Trigonometric function formulas $\cos(\alpha + 90^\circ) = \dfrac{x}{g}$ and

$\sin(\alpha + 90^\circ) = -\dfrac{z}{g}$ are used, where x and z are measured known quantities, so that a value of $\alpha$ can be determined and obtained. Further, a rotation arc length of the wearable device may be further calculated by using the rotation angle $\alpha$, that is, a rotation arc length of the position sensor 40, $L = \dfrac{\alpha \pi R}{180^\circ}$, where $\alpha$ is the rotation angle, and R is a radius corresponding to the arc length, that is, a radius corresponding to a circle formed by the position sensor rotating one round. It should be noted that, in the foregoing instance, a result is obtained by means of calculation and only by using an example in which the position sensor rotates one round to form a circle, that is, a case of assuming that the wearable device is ring-shaped. Actually, the wearable device may be elliptical ring-shaped or be irregular ring-shaped structure; in this case, the rotation angle $\alpha$ and the rotation arc length L are determined according to calculation manners corresponding to different shapes.

After the rotation angle $\alpha$ of the wearable device is determined, the move amount of the display area is determined according to the first correspondence between the rotation angle $\alpha$ and the move amount of the display area, so that a final display position of the display area is determined according to the reference display area. The reference display area is a predefined display area, and a position of the reference display area may be determined according to a use habit of the user.

Optionally, after the rotation angle $\alpha$ of the wearable device is determined, the rotation arc length L may be calculated according to the rotation angle $\alpha$, further, the move amount of the display area is determined according to a second correspondence between the rotation arc length and the move amount of the display area, and then a final display position of the display area is determined according to the reference display area.

The first correspondence or second correspondence described in the foregoing embodiment may include the following two corresponding rules: One is a continuous mapping correspondence, and a concept of the continuous mapping may be understood as uniform continuity. If a function is uniformly continuous in a metric space, the function is definitely continuous in the metric space, but the converse may not hold. Intuitively, the uniform continuity may be understood as follows: When an independent variable x varies in a small enough range, a variation of a function value y is also limited in a small enough range. In a view of the user, the display area can flow on the display screen 20 as the wearable device rotates. Certainly, the continuous mapping defined in this embodiment may also be non-uniformly continuous mapping according to a requirement, and is used only as an example for description herein. The other correspondence may be as follows: When the rotation angle reaches a first threshold, the move amount of the display area is correspondingly a first fixed value. For example, the first threshold is defined as $K$, and the rotation angle of the wearable device is determined as $\alpha_1$; if the rotation angle $\alpha_1 \geq K$, the move amount of the display area is determined as H; or if the rotation angle $\alpha_1 < K$, the move amount of the display area is determined as 0, that is, the display area does not move. Alternatively, the other correspondence may be as follows: When the rotation arc length reaches a second threshold, the move amount of the display area is correspondingly a second fixed value. An implementation manner is the same as that of the foregoing correspondence between the rotation angle and the move amount of the display area, and details are not described herein. In the other correspondence, the display area sequentially shifts to appear on the display screen as the wearable device rotates.

After determining the position of the display area, the processor 10 controls the display screen 20 to display the current content at the position of the display area. It may be understood that a size of the display area is a partial size of the display screen 20, and the size may be designed according to a requirement of a manufacturer, or may be set according to a user operation. For example, if considering that the display area is relatively small, the user can drag a display border or perform a gesture or key operation to enlarge the display area, which can satisfy requirements of different users for browsing different pages.

Further or optionally, after the display area is lighted up at the position of the display area to display the current content, when the processor 10 determines that display space occupied by the current content does not exceed the display area, a page of the current content is switched as the display area moves. For example, the current content is an SMS message, a small picture, or the like; in this case, the processor 10 switches the page of the current content to a next page according to a movement of the display area. When display space occupied by the current content exceeds the display area, the current content does not move as the display area moves. For example, the current content is an address book, a long email, or the like; in this case, the processor 10 controls, according to a movement of the display area, the display area to further display at least a part of remaining content of the current content, that is, the remaining content that cannot be displayed in the current display area is continuously displayed. In this solution, display manners may be chosen for pages with different sizes, so that a user can view files with different sizes, and a file class does not need to be limited.

Optionally or further, after the display area moves, a previous display area of the display area may turn black, so as to achieve a power saving effect; or a previous display area of the display area may not be extinguished, so as to achieve an effect of gradually lighting up the entire display screen 20.

Further or optionally, after the display area is lighted up at the position of the display area to display the current content, if the user considers that the position of the display area is inaccurate, the processor 10 may further calibrate the position of the display area according to an operation performed by the user on the display area. For example, the display area may be dragged to a proper position, or the display area may be moved to a proper position by performing a tapping/double-tapping or key operation. Requirements of different users for the position of the display area can be satisfied by calibrating the display area, thereby improving flexibility of display area adaptation, and bringing better experience for a user.

It may be understood that all of the rotation angle, the rotation arc length, the move amount of the display area, and the like that are involved in this embodiment are vector data.

As shown in FIG. 2, it may be understood that the wearable device 100 may further include a memory 60, configured to store a software program and a module, and by running the software program and the module that are stored in the memory 60, the processor 10 executes various functional applications of the wearable device 100 and implements data processing. The memory 60 may mainly include a program storage area and a data storage area, where the program storage area may store an operating system, an application program required by at least one function (such as a sound play function or an image play function), and the like; and the data storage area may store data (such as audio data or a phonebook) created according to use of the wearable device 100, and the like. In addition, the memory 60 may include a high-speed random access memory, and may further include a non-volatile memory, for example, at least one magnetic disk storage component, a flash memory component, or another volatile solid-state storage component.

The input unit 30 may be configured to receive input digits or character information, and generate key signal input related to user setting and function control of the wearable device 100. Specifically, the input unit 30 may include a touch panel 31 and another input device 32. The touch panel 31 is also referred to as a touchscreen and may collect a touch operation (such as an operation performed by a user on the touch panel 31 or near the touch panel 31 by using a finger or any proper object or accessory such as a stylus) of the user on or near the touch panel, and drive a corresponding connection apparatus according to a preset program. Optionally, the touch panel 31 may include two parts: a touch detection apparatus and a touch controller. The touch detection apparatus detects a touch location of a user, detects a signal brought by a touch operation, and sends the signal to the touch controller. The touch controller receives touch information from the touch detection apparatus, converts the touch information into touch coordinates, and sends the touch coordinates to the processor 10, and can receive and execute a command sent by the processor 10. In addition, the touch panel 31 may be implemented in multiple types such as a resistive type, a capacitive type, an infrared ray, and a surface acoustic wave. The input unit 30 may further include the another input device 32 in addition to the touch panel 31. Specifically, the another input device 32 may include but is not limited to one or more of a physical keyboard, a function key (such as a volume control key or an on/off key), a trackball, a mouse, a joystick, or the like.

The display screen 20 may be configured to display information entered by the user or information provided for the user, and various menus of the wearable device 100. The display screen 20 may include a display panel 21. Optionally, the display panel 21 may be configured in a form such as an LCD (Liquid Crystal Display, liquid crystal display) or an OLED (Organic Light-Emitting Diode, organic light-emitting diode). Further, the touch panel 31 may cover the display panel 21. When detecting a touch operation on or near the touch panel 31, the touch panel 31 transmits the touch operation to the processor 10 to determine a type of a touch event, and then the processor 10 provides corresponding visual output on the display panel 21 according to the type of the touch event. Although the touch panel 31 and the display panel 21 in FIG. 2 are used as two independent parts to implement input and input functions of the wearable device 100, in some embodiments, the touch panel 31 and the display panel 21 may be integrated to implement the input and output functions of the wearable device 100.

The wearable device 100 may further include an audio unit 80, where the audio unit 80 further includes an audio circuit 81 and a loudspeaker 82. The audio circuit 81 may transmit, to the loudspeaker 82, an electric signal obtained by converting received audio data, and the loudspeaker 82 converts the electric signal into a sound signal for outputting.

The wearable device 100 may further include a radio frequency module 50 and a WiFi module 90. WiFi belongs to a short-distance radio transmission technology. The wearable device 100 can help a user receive and send an email, browse a web page, gain access to streaming media, and the like by using the WiFi module 90. The WiFi module 90 provides the user with wireless broadband Internet access. Although FIG. 2 shows the WiFi module 90, it may be understood that the WiFi module 90 does not belong to a mandatory part of the wearable device 100, and may be omitted according to a need without changing the essence of the present invention.

The wearable device 100 further includes a power supply 91 (such as a battery) that supplies power to each component. Preferably, the power supply 91 may be logically connected to the processor 30 by using a power supply management system. In this way, functions such as management of charging, discharging, and power consumption are implemented by using the power supply management system.

The wearable device 100 may further include a camera, a Bluetooth module, and the like, which are not shown, and details are not described herein.

The processor 10 is a control center of the wearable device 100, connects all parts of the entire mobile phone by using various interfaces and lines, executes, by running or executing the software program and/or the module stored in the memory 60 and by invoking the data stored in the memory 60, various functions of the wearable device 100 and processes the data, so as to perform overall monitoring on the mobile phone. Optionally, the processor 10 may include one or more processing units. Preferably, an application processor and a modem processor may be integrated into the processor 10, where the application processor mainly processes an operating system, a user interface, an application program, and the like; and the modem processor mainly processes wireless communication. It may be understood that the foregoing modem processor may either not be integrated into the processor 10.

The foregoing embodiment is an entity hardware embodiment of the present invention, and the following generally describes an embodiment of a display processing method for a screen of the wearable device based on the entity hardware embodiment. For an implementation solution of the method embodiment, refer to the foregoing entity hardware embodiment, and a detailed implementation solution of the method embodiment is not repeated.

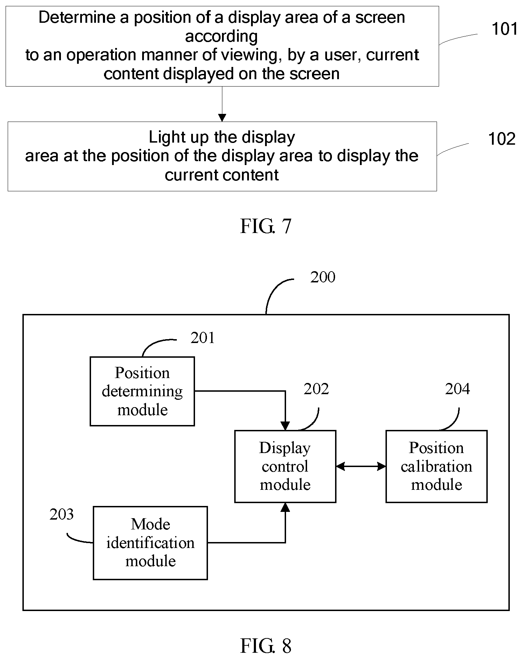

FIG. 7 is a flowchart of a display processing method for a screen of a wearable device according to an embodiment of the present invention.

This embodiment provides a display method for a screen of a wearable device, and the method includes the following steps:

Step 101: Determine a position of a display area of the screen according to an operation manner of viewing, by a user, current content displayed on the screen, where the display area is a partial area of the screen, and the operation manner includes one of a display area designation operation and an automatic display area identification operation.

Step 102: Light up the display area at the position of the display area to display the current content.

The wearable device in this embodiment of the present invention can locate the position of the display area of the screen by determining a manner of an operation performed by the user on the wearable device, so as to light up the display area to display the current content, and the user does not need to manually adjust the wearable device to a proper position to view the displayed content.

The display area designation operation includes tapping the screen at a target display position, and the automatic display area identification operation includes: tapping the screen at any position of the screen, pressing a specified key, a hover gesture operation, shaking or swinging the wearable device for specified times, a move track of moving the wearable device reaching a defined track range and a stay time on an end point of the move track reaching a specified time, or an acceleration of the wearable device reaching a defined value and a stay time of the wearable device on a move end point reaching a specified time.

When the operation manner is the automatic display area identification operation, the determining a position of a display area of the screen according to an operation manner of viewing, by a user, current content displayed on the screen includes: determining a rotation angle of the wearable device, and determining the position of the display area according to a reference display area and a first correspondence between the rotation angle and a move amount of the display area. The first correspondence is a continuous mapping correspondence between the rotation angle and the move amount of the display area or a correspondence in which a first threshold that the rotation angle reaches corresponds to a first fixed value of the move amount of the display area.

Optionally, when the operation manner is the automatic display area identification operation, the determining a position of a display area of the screen according to an operation manner of viewing, by a user, current content displayed on the screen includes: determining an arc length of a rotation track of the wearable device, and determining the position of the display area according to a reference display area and a second correspondence between the arc length of the rotation track and a move amount of the display area.

The second correspondence is a continuous mapping correspondence between the arc length of the rotation track and the move amount of the display area or a correspondence in which a second threshold that the arc length of the rotation track reaches corresponds to a second fixed value of the move amount of the display area.

Optionally, when the operation manner is the display area designation operation, the determining a position of a display area of the screen according to an operation manner of viewing, by a user, current content displayed on the screen includes: determining, by using a user tapping position as a center, the position of the display area according to a specified display area size.

Further or optionally, before step 102, the method further includes: determining a left/right hand mode of the wearable device according to a direction of the move track of the wearable device, where in the left hand mode of the wearable device, the current content is displayed in a first direction, and in the right hand mode of the wearable device, the current content is displayed in a second direction.

Further or optionally, after step 102, the method further includes: when display space occupied by the current content does not exceed the display area, switching a page of the current content as the display area moves; or when display space occupied by the current content exceeds the display area, further displaying at least a part of remaining content of the current content as the display area moves.

Further or optionally, after step 102, the method further includes: calibrating the position of the display area according to a calibration signal generated by a user operation.

The foregoing is the method step embodiment summarized on a basis of the entity hardware embodiment, and the following generally describes an embodiment of a virtual apparatus of the wearable device based on the entity hardware embodiment. For an implementation solution of the embodiment of the virtual apparatus, refer to the foregoing entity hardware embodiment, and details are not repeated herein.

FIG. 8 is a module diagram of a wearable device according to an embodiment of the present invention.

This embodiment of the present invention provides a wearable device 200, where the wearable device 200 includes a position determining module 201 and a display control module 202. The position determining module 201 and the display control module 202 are connected, and the position determining module 201 is configured to determine a position of a display area of the screen according to an operation manner of viewing, by a user, current content displayed on the screen, where the display area is a partial area of the screen, and the operation manner includes one of a display area designation operation and an automatic display area identification operation.

The display control module 202 is configured to light up the display area at the position of the display area to display the current content.

The wearable device in this embodiment of the present invention can locate the position of the display area of the screen by determining a manner of an operation performed by the user on the wearable device, so as to light up the display area to display the current content, and the user does not need to manually adjust the wearable device to a proper position to view the displayed content.

The display area designation operation includes tapping the screen at a target display position, and the automatic display area identification operation includes: tapping the screen at any position of the screen, pressing a specified key, a hover gesture operation, shaking or swinging the wearable device for specified times, a move track of moving the wearable device reaching a defined track range and a stay time on an end point of the move track reaching a specified time, or an acceleration of the wearable device reaching a defined value and a stay time of the wearable device on a move end point reaching a specified time.

When the operation manner is the automatic display area identification operation, that the position determining module 201 determines the position of the display area of the screen according to the operation manner of the user viewing the current content displayed on the screen includes: determining, by the position determining module 201, a rotation angle of the wearable device, and determining the position of the display area according to a reference display area and a first correspondence between the rotation angle and a move amount of the display area. The first correspondence is a continuous mapping correspondence between the rotation angle and the move amount of the display area or a correspondence in which a first threshold that the rotation angle reaches corresponds to a first fixed value of the move amount of the display area.

Optionally, when the operation manner is the automatic display area identification operation, that the position determining module 201 determines the position of the display area of the screen according to the operation manner of the user viewing the current content displayed on the screen includes: determining an arc length of a rotation track of the wearable device, and determining the position of the display area according to a reference display area and a second correspondence between the arc length of the rotation track and a move amount of the display area.

The second correspondence is a continuous mapping correspondence between the arc length of the rotation track and the move amount of the display area or a correspondence in which a second threshold that the arc length of the rotation track reaches corresponds to a second fixed value of the move amount of the display area.

Optionally, when the operation manner is the display area designation operation, that the position determining module 201 determines the position of the display area of the screen according to the operation manner of the user viewing the current content displayed on the screen includes: determining, by the position determining module 201 by using a user tapping position as a center, the position of the display area according to a specified display area size.

Further or optionally, the wearable device 200 further includes a mode identification module 203, where the mode identification module 203 determines a left/right hand mode of the wearable device according to a direction of the move track of the wearable device 200. In the left hand mode of the wearable device, the current content is displayed in a first direction, and in the right hand mode of the wearable device, the current content is displayed in a second direction.

Further or optionally, when determining that display space occupied by the current content does not exceed the display area, the display control module 202 controls a page of the current content to be switched as the display area moves; or when determining that display space occupied by the current content exceeds the display area, the display control module 202 controls a movement of the display area to further display at least a part of remaining content of the current content.

Further or optionally, the wearable device 200 may further include a position calibration module 204, where the position calibration module 204 calibrates the position of the display area according to a calibration signal generated by a user operation.

The wearable device 200 in this embodiment can locate the position of the display area of the screen by determining a manner of an operation performed by the user on the wearable device, so as to light up the display area to display the current content, and the user does not need to manually adjust the wearable device to a proper position to view the displayed content.

It should be noted that, in combination with the steps of the methods and modules described in the embodiments disclosed in this specification, implementation may be performed by electronic hardware or a combination of computer software and hardware. The foregoing description already generally describes the steps and compositions of each embodiment according to functions. Whether the functions are performed by hardware or software and hardware depends on particular applications and design constraint conditions of the technical solutions. Persons of ordinary skill in the art may use different methods to implement the described functions for each particular application, but it should not be considered that the implementation goes beyond the scope of the present invention.

The methods or steps described in the embodiments disclosed in this specification may be implemented by hardware, a software program executed by a processor, or a combination thereon. The software program may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

The present invention is described in detail with reference to the accompany drawings and in combination with the exemplary embodiments, but the present invention is not limited thereto. Various equivalent modifications or replacements can be made to the embodiments of the present invention by persons of ordinary skill in the art without departing from the spirit and essence of the present invention, and the modifications or replacements shall fall within the scope of the present invention.

**Claims**

1. A display method for a screen of a wearable device, wherein the method comprises:

   determining a position of a display area of the screen according to an operation manner of viewing, by a user, current content displayed on the screen, wherein the display area is a partial area of the screen, and the operation manner comprises one of a display area designation operation and an automatic display area identification operation; and
   lighting up the display area at the position of the display area to display the current content.

2. The method according to claim 1, wherein the display area designation operation comprises tapping the screen at a target display position, and the automatic display area identification operation comprises: tapping the screen at any position of the screen, pressing a screen display key, a hover gesture operation, shaking or swinging the wearable device for specified times, a move track of the wearable device reaching a defined track range and a stay time on a move end point reaching a specified time, or an acceleration of the wearable device reaching a defined threshold and a stay time on a move end point reaching a specified time.

3. The method according to claim 2, wherein when the operation manner is the automatic display area identification operation, the determining a position of a display area of the screen according to an operation manner of viewing, by a user, current content displayed on the screen comprises: determining a rotation angle of the wearable device, and determining the position of the display area according to a reference display area and a first correspondence between the rotation angle and a move amount of the display area, wherein the first correspondence is a continuous mapping correspondence between the rotation angle and the move amount of the display area or a relationship in which a first threshold that the rotation angle reaches corresponds to a first fixed value of the move amount of the display area.

4. The method according to claim 2, wherein when the operation manner is the automatic display area identification operation, the determining a position of a display area of the screen according to an operation manner of viewing, by a user, current content displayed on the screen comprises: determining an arc length of a rotation track of the wearable device, and determining the position of the display area according to a reference display area and a second correspondence between the arc length of the rotation track and a move amount of the display area, wherein the second correspondence is a continuous mapping correspondence between the arc length of the rotation track and the move amount of the display area or a correspondence in which a second threshold that the arc length of the rotation track reaches corresponds to a second fixed value of the move amount of the display area.

5. The method according to claim 2, wherein when the operation manner is the display area designation operation, the determining a position of a display area of the screen according to an operation manner of viewing, by a user, current content displayed on the screen comprises: determining, by using a user tapping position as a center, the position of the display area according to a specified display area size.

6. The method according to any one of claims 1 to 5, wherein the method further comprises: before the lighting up the display area at the position of the display area to display the current content, further comprising: determining a left/right hand mode of the wearable device according to a direction of the move track of the wearable device, wherein in the left hand mode of the wearable device, the current content is displayed in a first direction, and in the right hand mode of the wearable device, the current content is displayed in a second direction.

7. The method according to any one of claims 1 to 6, wherein after the lighting up the display area at the position of the display area to display the current content, the method further comprises: when display space occupied by the current content does not exceed the display area, switching a page of the current content as the display area moves; or when display space occupied by the current content exceeds the display area, further displaying at least a part of remaining content of the current content as the display area moves.

8. The method according to any one of claims 1 to 7, wherein after the lighting up the display area at the position of the display area to display the current content, the method further comprises: calibrating the position of the display area according to a calibration signal generated by a user operation.

9. A wearable device, wherein the wearable device comprises:

   a position determining module, configured to determine a position of a display area of the screen according to an operation manner of viewing, by a user, current content displayed on the screen, wherein the display area is a partial area of the screen, and the operation manner comprises one of a display area designation operation and an automatic display area identification operation; and
   a display control module, configured to light up the display area at the position of the display area to display the current content.

10. The wearable device according to claim 9, wherein the display area designation operation comprises tapping the screen at a target display position, and the automatic display area identification operation comprises: tapping the screen at any position of the screen, pressing a screen display key, a hover gesture operation, shaking or swinging the wearable device for specified times, a move track of the wearable device reaching a defined track range and a stay time on a move end point reaching a specified time, or an acceleration of the wearable device reaching a defined threshold and a stay time on a move end point reaching a specified time.

11. The wearable device according to claim 10, wherein when the operation manner is the automatic display area identification operation, the position determining module determines a rotation angle of the wearable device, and determines the position of the display area according to a reference display area and a first correspondence between the rotation angle and a move amount of the display area, wherein the first correspondence is a continuous mapping correspondence between the rotation angle and the move amount of the display area or a correspondence in which a first threshold that the rotation angle reaches corresponds to a first fixed value of the move amount of the display area.

12. The wearable device according to claim 10, wherein when the operation manner is the automatic display area identification operation, the position determining module determines an arc length of a rotation track of the wearable device, and determines the position of the display area according to a reference display area and a second correspondence between the arc length of the rotation track and a move amount of the display area, wherein the second correspondence is a continuous mapping correspondence between the arc length of the rotation track and the move amount of the display area or a correspondence in which a second threshold that the arc length of the rotation track reaches corresponds to a second fixed value of the move amount of the display area.

13. The wearable device according to claim 10, wherein when the operation manner is the display area designation operation, the position determining module determines, by using a user tapping position as a center, the position of the display area according to a specified display area size.

14. The wearable device according to claims 9 to 13, wherein the wearable device further comprises a mode identification module, and the mode identification module determines a left/right hand mode of the wearable device according to a direction of the move track of the wearable device, wherein in the left hand mode of the wearable device, the current content is displayed in a first direction, and in the right hand mode of the wearable device, the current content is displayed in a second direction.

15. The wearable device according to claims 9 to 14, wherein when determining that display space occupied by the current content does not exceed the display area, the display control module controls a page of the current content to be switched as the display area moves; or when determining that display space occupied by the current content exceeds the display area, the display control module controls a movement of the display area to further display at least a part of remaining content of the current content.

16. The wearable device according to any one of claims 9 to 15, wherein the wearable device further comprises a calibration module, and the calibration module calibrates the position of the display area according to a calibration signal generated by a user operation.

17. A wearable device, wherein the wearable device comprises at least one processor, a display screen, and an input unit; the display screen and the input unit are connected to the processor by using a data bus, the input unit receives an operation of viewing, by a user, current content displayed on the display screen, the processor determines a position of a display area of the display screen according to the operation manner of viewing, by the user, the current content displayed on the display screen, wherein the display area is a partial area of the screen, and the operation manner comprises one of a display area designation operation and an automatic display area identification operation, and the processor controls the display screen, and lights up the display area at the position of the display area to display the current content.

18. The wearable device according to claim 17, wherein the display area designation operation comprises tapping the screen at a target display position, and the automatic display area identification operation comprises: tapping the screen at any position of the screen, pressing a screen display key, a hover gesture operation, shaking or swinging the wearable device for specified times, a move track of the wearable device reaching a defined track range and a stay time on a move end point reaching a specified time, or an acceleration of the wearable device reaching a defined threshold and a stay time on a move end point reaching a specified time.

19. The wearable device according to claim 18, wherein when the operation manner is the automatic display area identification operation, the processor determines a rotation angle of the wearable device, and determines the position of the display area according to a reference display area and a first correspondence between the rotation angle and a move amount of the display area, wherein the first correspondence is a continuous mapping correspondence between the rotation angle and the move amount of the display area or a correspondence in which a first threshold that the rotation angle reaches corresponds to a first fixed value of the move amount of the display area.

20. The wearable device according to claim 18, wherein when the operation manner is the automatic display area identification operation, the processor determines an arc length of a rotation track of the wearable device, and determines the position of the display area according to a reference display area and a second correspondence between the arc length of the rotation track and a move amount of the display area, wherein the second correspondence is a continuous mapping correspondence between the arc length of the rotation track and the move amount of the display area or a correspondence in which a second threshold that the arc length of the rotation track reaches corresponds to a second fixed value of the move amount of the display area.

21. The wearable device according to claim 18, wherein when the operation manner is the display area designation operation, the processor determines, by using a user tapping position as a center, the position of the display area according to a specified display area size.

22. The wearable device according to any one of claims 17 to 21, wherein the processor further determines a left/right hand mode of the wearable device according to a direction of the move track of the wearable device, wherein in the left hand mode of the wearable device, the current content is displayed in a first direction, and in the right hand mode of the wearable device, the current content is displayed in a second direction.

23. The wearable device according to claims 17 to 22, wherein when determining that display space occupied by the current content does not exceed the display area, the processor controls a page of the current content to be switched as the display area moves; or when determining that display space occupied by the current content exceeds the display area, the processor controls a movement of the display area to further display at least a part of remaining content of the current content.

24. The wearable device according to any one of claims 17 to 23, wherein the processor further calibrates the position of the display area according to a calibration signal generated by a user operation.

FIG. 1

FIG. 2

FIG. 3

FIG. 4

FIG. 5

FIG. 6

FIG. 7

FIG. 8

# INTERNATIONAL SEARCH REPORT

| International application No. |
| --- |
| **PCT/CN2015/092943** |

## A. CLASSIFICATION OF SUBJECT MATTER

G06F 3/01 (2006.01) i

According to International Patent Classification (IPC) or to both national classification and IPC

## B. FIELDS SEARCHED

Minimum documentation searched (classification system followed by classification symbols)

G06F, G06K, G06G, H04W, H04M

Documentation searched other than minimum documentation to the extent that such documents are included in the fields searched

Electronic data base consulted during the international search (name of data base and, where practicable, search terms used)

CNPAT, CNKI, WPI, EPODOC: wear, line of sight, dress, wristband, glasses, locat+, watch, bracelet, wearable?, automat+, adapt+, operat+, motion, action, movement, determin+, adjust+, screen, display+, sight, area, zone, region, part+

## C. DOCUMENTS CONSIDERED TO BE RELEVANT

| Category* | Citation of document, with indication, where appropriate, of the relevant passages | Relevant to claim No. |
| --- | --- | --- |
| PX | CN 104850317 A (HUAWEI TERMINAL (DONGGUAN) CO., LTD.), 19 August 2015 (19.08.2015), claims 1-24 | 1-24 |
| X | WO 2013169237 A1 (INTEL CORPORATION), 14 November 2013 (14.11.2013), description, page 3, line 24 to page 16, line 15, and page 22, line 30 to page 23, line 28, and figures 1-3 and 6 | 1-2, 5, 9-10, 13, 17-18, 21 |
| A | WO 2013169237 A1 (INTEL CORPORATION), 14 November 2013 (14.11.2013), the whole document | 3-4, 6-8, 11-12, 14-16, 19-20, 22-24 |
| A | CN 103853330 A (SHENZHEN ZTE MOBILE TELECOM CO., LTD.), 11 June 2014 (11.06.2014), the whole document | 1-24 |
| A | CN 103677269 A (XIAOMI TECHNOLOGY CO., LTD.), 26 March 2014 (26.03.2014), the whole document | 1-24 |
| A | CN 103455256 A (XIAOMI TECHNOLOGY CO., LTD.), 18 December 2013 (18.12.2013), the whole document | 1-24 |

☒ Further documents are listed in the continuation of Box C.     ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 15 January 2016 (15.01.2016) | **27 January 2016 (27.01.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **YAN, Jie** Telephone No.: (86-10) **62413393** |
| --- | --- |

Form PCT/ISA/210 (second sheet) (July 2009)

# EP 3 229 105 A1

<table>
<tr><td align="center"><strong>INTERNATIONAL SEARCH REPORT</strong></td><td>International application No.<br><strong>PCT/CN2015/092943</strong></td></tr>
</table>

**C (Continuation).     DOCUMENTS CONSIDERED TO BE RELEVANT**

| Category* | Citation of document, with indication, where appropriate, of the relevant passages | Relevant to claim No. |
|---|---|---|
| A | EP 2741176 A2 (SAMSUNG ELECTRONICS CO., LTD.), 11 June 2014 (11.06.2014), the whole document | 1-24 |
| A | US 2002113755 A1 (SAMSUNG ELECTRONICS CO., LTD.), 22 August 2002 (22.08.2002), the whole document | 1-24 |

Form PCT/ISA/210 (continuation of second sheet) (July 2009)

## INTERNATIONAL SEARCH REPORT
### Information on patent family members

International application No.

**PCT/CN2015/092943**

| Patent Documents referred in the Report | Publication Date | Patent Family | Publication Date |
|---|---|---|---|
| CN 104850317 A | 19 August 2015 | None | |
| WO 2013169237 A1 | 14 November 2013 | TW 201411413 A | 16 March 2014 |
| | | EP 2847648 A1 | 18 March 2015 |
| | | CN 104395857 A | 04 March 2015 |
| | | JP 2015528120 A | 24 September 2015 |
| | | US 2014002352 A1 | 02 January 2014 |
| CN 103853330 A | 11 June 2014 | None | |
| CN 103677269 A | 26 March 2014 | None | |
| CN 103455256 A | 18 December 2013 | None | |
| EP 2741176 A2 | 11 June 2014 | WO 2014092437 A1 | 19 June 2014 |
| | | US 2014160078 A1 | 12 June 2014 |
| | | CN 105144026 A | 09 December 2015 |
| US 2002113755 A1 | 22 August 2002 | KR 100406945 B1 | 28 November 2003 |
| | | KR 20020067948 A | 24 August 2002 |
| | | US 7193584 B2 | 20 March 2007 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201410857634